**Europäisches Patentamt**

(19) **European Patent Office**

**Office européen des brevets**

(11) Publication number : **0 283 255 B1**

(12) **EUROPEAN PATENT SPECIFICATION**

(45) Date of publication of patent specification :
**02.11.95 Bulletin 95/44**

㉕ Int. CI.⁶ : **G09G 1/00,** G06T 5/40,
H04N 17/04

(21) Application number : **88302273.3**

(22) Date of filing : **16.03.88**

(54) **Image display having automatic image adjustment.**

(30) Priority : **18.03.87 US 27377**

(43) Date of publication of application :
**21.09.88 Bulletin 88/38**

(45) Publication of the grant of the patent :
**02.11.95 Bulletin 95/44**

(84) Designated Contracting States :
**CH DE FR GB IT LI NL SE**

(56) References cited :
**WO-A-86/06905**
**US-A- 4 415 921**
**US-A- 4 433 345**
**US-A- 4 445 138**
**US-A- 4 639 867**

(73) Proprietor : **GENERAL ELECTRIC COMPANY**
**1 River Road**
**Schenectady, NY 12345 (US)**

(72) Inventor : **Zettel, Hubert Anthony**
**W225 S4375 Guthrie Road**
**Waukesha Wisconsin 53186 (US)**
Inventor : **Sievenpiper, Crispian Lee**
**341 NW Barstow Street**
**Waukesha Wisconsin 53188 (US)**

(74) Representative : **Greenwood, John David et al**
**London Patent Operation,**
**General Electric Technical Services Company,**
**Inc.,**
**Essex House,**
**12/13 Essex Street**
**London WC2R 3AA (GB)**

## Description

The present invention relates in general to image displays and more specifically to apparatus for removing irrelevant background information and/or for adjusting image brightness and contrast according to statistical information of the image.

The various applications of video displays and of hard-copy presentation of images have increased as computer graphics capabilities have improved. In an interactive graphics system, a processor creates a display file according to instructions from an operator. In one common arrangement, a displayed image consists of a plurality of pixels arranged in columns and rows. The display file consists of a magnitude for each pixel. In displaying an image, the operator can specify certain image parameters, such as image brightness and/or contrast.

Adjustment of such parameters may be critical in many applications to best visualize certain aspects of the data in the image. For example, in medical diagnostic imaging modalities, such as X-ray, nuclear medicine, computed tomography (CT), and nuclear magnetic resonance (NMR), optimum brightness and contrast varies according to the objective or specific parameters of an imaging experiment, and according to operator preference.

It is typically inconvenient and time consuming to adjust each image in a series of images taken by an operator. In addition to presenting an image to the operator during an image experiment (usually on a cathode ray tube), it is often desired to transfer images to film or to other permanent record. However, inefficiency results if the operator is required to adjust each new image during a series of experiments and filming operations to best visualize the information being sought.

A further problem in presenting an optimum image on the graphics display relates to the significance of a background in the image in relation to the region of interest. For example, where a background exists, it may contribute noise to the image which interferes with presentation of the region of interest.

According to a first aspect of the invention, there is provided an apparatus for adjusting brightness and contrast of images constructed from image data including a plurality of pixel values for each respective image, the apparatus comprising means for providing a histogram of the image data corresponding to each respective image, the histogram representing the number of pixels of an image having each possible pixel value; means for calculating the mean value and the standard deviation of each histogram; means for displaying a first image corresponding to at least a portion of the image data with arbitrary initial brightness and contrast; means for adjusting the appearance of the first displayed image to provide a preferred image; means for computing a brightness scale factor derived from the difference between the mean brightness of the preferred image and the mean brightness of the pixel values corresponding to the first image and for further computing a contrast scale factor derived from the ratio of the displayed image standard deviation of the preferred image to the standard deviation from mean brightness of the pixel values corresponding to the first image; and scaling means for changing the mean brightness and standard deviation of subsequently displayed images according to the brightness scale factor and the contrast scale factor.

This will normally tend to provide consistent image presentation over a series of images.

According to a second aspect of the invention, there is provided a method for adjusting brightness and contrast of images constructed from image data including a plurality of pixel values for each respective image, the method comprising the steps of: providing a histogram of the image data corresponding to each respective image, the histogram representing the number of pixels of an image having each possible pixel value; calculating the mean value and the standard deviation of each histogram; displaying a first image corresponding to at least a portion of the image data with arbitrary initial brightness and contrast; adjusting the appearance of the first displayed image to provide a preferred image; computing a brightness scale factor derived from the difference between the means brightness of the preferred image and the mean brightness of the pixel values corresponding to the first image; computing a contrast scale factor derived from the ratio of the displayed image standard deviation of the preferred image to the standard deviation from mean brightness of the pixel values corresponding to the first image; and changing the mean brightness and standard deviation of subsequently displayed images according to the brightness scale factor and the contrast scale factor.

This will normally tend to reduce the impact of image background on presentation of the region of interest.

Embodiments of the present invention may help to improve operator efficiency in medical diagnostic image experiments.

An embodiment of the present invention given by way of example only, will now be described with reference to the accompanying drawings, in which:

FIGURE i is a block diagram of a graphics system suitable for use with an embodiment of the present invention;

FIGURE 2 is a diagram of a display having a plurality of pixels;

FIGURE 3 is an example of a histogram of an image display file;

FIGURE 4 is a block diagram illustrating one embodiment of the method of the present invention; and

FIGURE 5 is a block circuit diagram embodying the present invention.

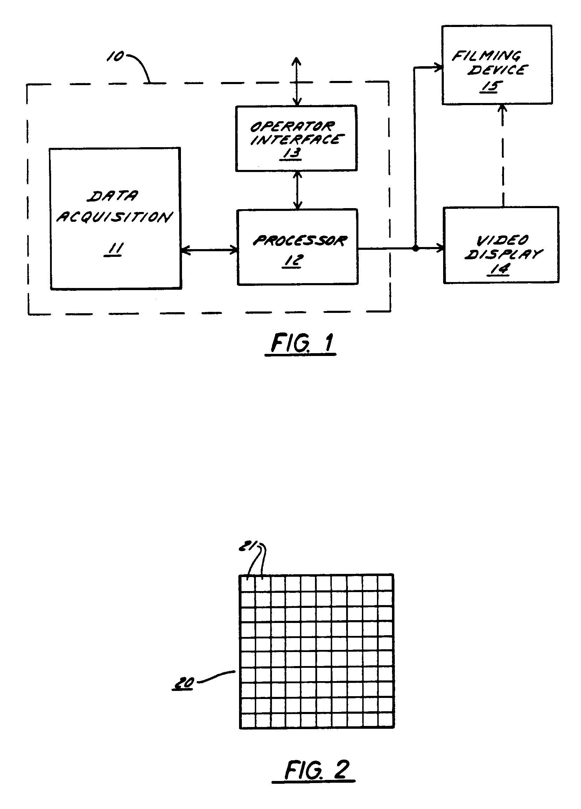

Turning now to Figure 1, a graphics system 10 includes data acquisition apparatus 11 and a processor 12. An operator interface 13 is coupled to processor 12 to allow an operator to control the operation of system 10. Coupled to the output of processor 12 are a video display 14 and a filming device 15. In medical diagnostic applications, data acquisition apparatus 11 may comprise a well-known NMR apparatus or CT scanner. These systems provide information about an object which can be processed to form an image.

Video display 14 preferably comprises a cathode-ray tube (CRT) and associated electronics to display an image corresponding to an output signal from processor 12. Filming device 15 could be constructed to record images projected by video display 14 or alternatively could be constructed to produce hard-copy images directly from the output of processor 12 (e.g., a laser camera).

In a preferred embodiment of the invention, the images displayed by video display 14 and filming device 15 are composed of a plurality of pixels 21 arranged in a matrix 20 having a plurality of rows and columns, as shown in Figure 2. In response to data acquisition measurements from apparatus 11, processor 12 generates image data corresponding to an imaging experiment such that each pixel in the image has a magnitude associated with it. For example, in NMR imaging, each magnitude may represent a nuclei spin density in a particular volume which may be weighted according to a particular relaxation property of the nuclei. In CT, each magnitude may represent the X-ray attenuation of a particular part of a body.

The pixels of video display 14 or filming device 15 could produce an image with each pixel assuming a value directly proportional to these pixel magnitudes. However, better results are obtained when the operator conducting the experiment is allowed to adjust the characteristics of the displayed image so as to best visualize a structure of interest within the image. Medical diagnostic systems usually employ gray-scale (i.e., black and white) images, so that the adjustable characteristics of interest in those applications are brightness (i.e., level) and contrast (i.e., window or maximum deviation from level).

Another concern in presenting an image with optimum visualization of features within the image is the impact of background information surrounding the region of interest. For example, when the total field of view (FOV) of an image is greater than the expected region of interest within the image, pixel data corresponding to the background may have the effect of noise which can distort the image or reduce contrast in the region of interest.

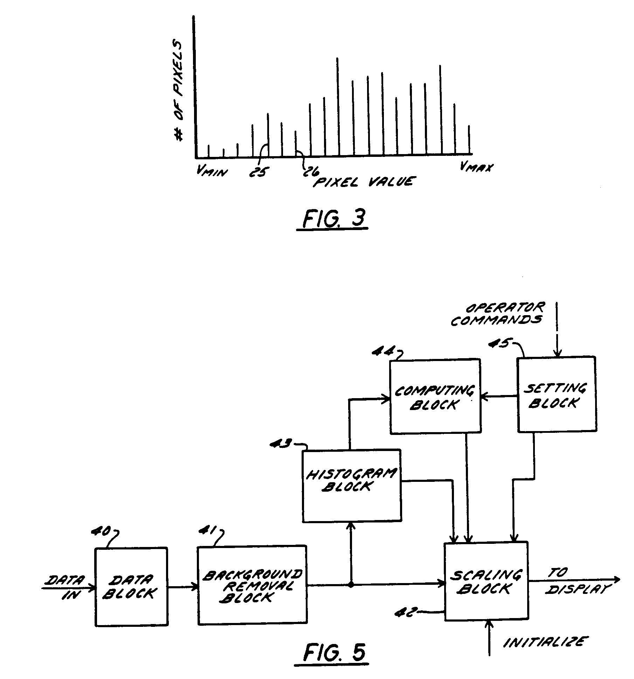

In one embodiment, the present invention achieves automatic setting of brightness and contrast according to an operator preference and reduces the effects of image background. In operation, the preferred embodiment employs an image pixel histogram, an example of which is shown in Figure 3. The histogram in Figure 3 graphically represents the total number of pixels in the image data for a particular image having each possible value of pixel magnitude (referred to as bins). Thus, for each pixel magnitude, there are a number of pixels with that magnitude, which can be plotted. The histogram can also be represented numerically. The use of an image pixel histogram facilitates automatic brightness and contrast approximation of operator perference and elimination of undesired background information as discussed below.

In the embodiment, determination of image brightness and contrast are based on statistical analysis of image data. It is the use of pixel statistics that allows the operator to specify a preference in brightness and contrast for one image with subsequent images having their brightness and contrast automatically adjusted to approximate that preference.

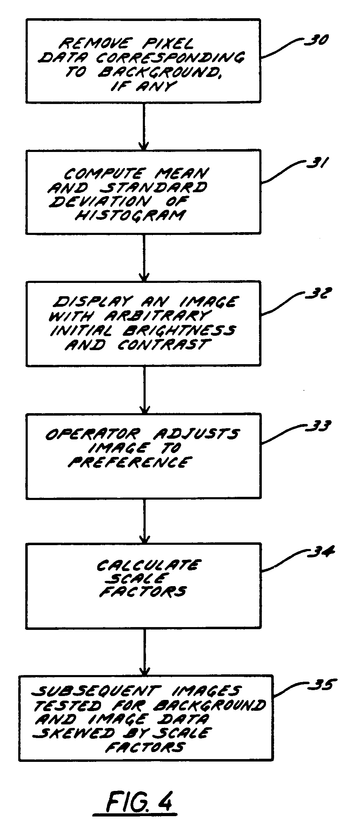

A preferred method of operation will be described with reference to Figure 4. In step 30, the method determines if any portion of the image can be considered as background (and hence ignored). The presence of background depends on the size of the region of interest relative to the total field of view of the image. In the present embodiment, it is assumed that background pixels are darker (ie., have a smaller magnitude) than the region of interest. Thus, if an image is found to contain background, then image data corresponding to pixel magnitudes below some determined magnitude are deleted from the histogram and from the image.

Relative size of field of view and region of interest can be directly determined from operator input or can be determined from other information available to the graphics system. For example, in NMR imaging, it is known to use various radio-frequency (RF) coils in imaging different portions of the body (e.g., a whole-body coil, a head coil or an extremity coil). Each coil has a known total imaging volume. For comparison, the operator inputs his desired field of view (i.e., magnification). In one exemplary NMR system, background removal is done when the field of view is (1) greater than or equal to 32 cm for a whole-body coil, (2) greater than or equal to 20 cm of a head coil, and (3) greater than or equal to 12 cm for an extremity coil, since a larger field of view is more likely to include a background.

Pixel removal is done from the lowest bin in the histogram to the first valley in the histogram immediately following the first peak. In other words, given a bin L, first determine the lowest bin x such that

$$L_{x-1} < L_x > L_{x+1}$$

where $L_{x+1}$ is the number of pixels per bin. This peak corresponds to bin 25 in the example of Figure 3. Next, find the smallest bin y following the peak such that

$L_{y-2} > L_{y-1} > L_y < L_{y+1}$.

Thus, in the preferred embodiment, $L_y$ must be decreasing for two consecutive bins in finding the valley. All of the pixels below bin y are then removed from the histogram.

In step 31 (Figure 4), the mean value and standard deviation are calculated of the histogram of a first image to be displayed. In step 32, the first image is displayed with arbitrary initial brightness and contrast. The image brightness (i.e., level) is directly proportional to the pixel mean value and the displayed image standard deviation (i.e., contrast or window) is directly proportional to the calculated standard deviation.

In step 33, the operator adjusts the image to his preference. This is preferably done via operator interface 13 (Figure 1). By changing the factor of porportionality (i.e., scaling) between displayed birghtness and pixel mean and between displayed standard deviation and calculated standard deviation in response to operator commands, the image is adjusted.

Once the operator has decided upon a preferred image, scale factors are calculated in step 34. Let $\alpha$ be the window scaling factor and let $\beta$ be the level offset factor. Also let $\sigma$ be the standard deviation found in step 31. Then the factors are preferably defined by

$$\alpha = W_o / \sigma$$

and

$$\beta = (L_o - L_a)/\sigma,$$

where $W_o$ and $L_o$ are the window and level of the operator's preferred image and $L_a$ is the mean from step 31. Alternatively, $\beta$ could be defined as $L_o - L_a$.

In step 35, subsequent images displayed or recorded by the graphics system are first tested for potential background removal in the same manner as described above with reference to step 30. The resulting histogram is then used in presenting the subsequent image. The image data for the subsequent image is skewed according to $\alpha$ and $\beta$ to present an image having a brightness $L_d$ and a window $W_d$ such that

$$W_d = \alpha \sigma'$$

and

$$L_d = L_a' + \beta(\sigma'),$$

where $\sigma'$ is the pixel standard deviation of the subsequent image's histogram, $L_a'$ is the histogram mean and $\beta(\sigma')$ equals $L_o - L_a')/\sigma'$. Alternatively, $L_d$ could be defined as $L_a' + \beta$.

The method described above is well adapted to be implemented by software in a typical graphics system. Figure 5 describes an implementation which can be taken to be either actual circuits in a hardware implementation or blocks or modules in a software implementation. A data block 40 receives image data such as pixel magnitudes, image histogram, size of region of interest and coil type (for NMR). Background removal block 41 deletes background pixel data as appropriate. A histogram, as modified by block 41, is stored in a histogram block 43.

A scaling block 42 receives image data and provides a scaled output for display. Scaling block 42 can be initialized to display a first image of selected arbitrary brightness and contrast.

A computing block 44 and a setting block 45 allow the operator to adjust the first image and cause subsequent images to approximate the operator's preference. Thus, setting block 45 receives commands from the operator to adjust the image produced by scaling block 42. Once a preferred image is obtained, computing block 44 derives the scale factors to be provided to scaling block 42 in processing subsequent images.

## Claims

1. An apparatus for adjusting brightness and contrast of images constructed from image data including a plurality of pixel values for each respective image, the apparatus comprising;

   means for providing a histogram (43) of the image data corresponding to each respective image, the histogram representing the number of pixels of an image having each possible pixel value;

   means for calculating the mean value and the standard deviation of each histogram;

   means for displaying a first image corresponding to at least a portion of the image data with arbitrary initial brightness and contrast;

   means for adjusting (45) the appearance of the first displayed image to provide a preferred image;

   means for computing (44) a brightness scale factor ($\beta$) derived from the difference between the mean brightness of the preferred image ($L_o$) and the mean brightness of the pixel values corresponding to the first image ($L_a$) and for further computing a contrast scale factor ($\alpha$) derived from the ratio of the displayed image standard deviation ($W_o$) of the preferred image to the standard deviation ($\delta$) from mean brightness of the pixel values corresponding to the first image; and

   scaling means (42) for changing the mean brightness and standard deviation of subsequently displayed images according to the brightness scale factor and the contrast scale factor.

2. The apparatus according to claim 1 comprising background removal means (41) coupled to the histogram means for selectably causing image data below a calculated level in the histogram to be ignored in displaying an image, the calculated value corresponding to the first valley immediately following the first peak in the histrogram.

**3.** Apparatus according to claims 1 or 2 wherein the image data includes the field of view of the image; and

background removal means (41) coupled to the data means for causing image data below a calculated level in the histogram to be ignored in displaying an image if the field of view is below a predetermined size, and for otherwise using the data below the calculated level in displaying an image, the calculated level corresponding to the first valley immediately following the first peak in the histogram.

**4.** Apparatus according to any one of the preceding claims wherein the image data includes the results from NMR measurements, wherein the image data further includes an indication of the type of coil used in deriving the NMR measurements and wherein the predetermined size of field of view is dependent on the coil indicated.

**5.** A method for adjusting brightness and contrast of images constructed from image data including a plurality of pixel values for each respective image, the method comprising the steps of:

providing a histogram (31) of the image data corresponding to each respective image, the histogram representing the number of pixels of an image having each possible pixel value;

calculating the mean value and the standard deviation of each histogram;

displaying (32) a first image corresponding to at least a portion of the image data with arbitrary initial brightness and contrast;

adjusting (33) the appearance of the first displayed image to provide a preferred image;

computing (34) a brightness scale factor ($\beta$) derived from the difference between the means brightness of the preferred image ($L_o$) and the mean brightness of the pixel values corresponding to the first image ($L_a$);

computing (34) a contrast scale factor ($\alpha$) derived from the ratio of the displayed image standard deviation ($W_o$) of the preferred image to the standard deviation ($\delta$) from mean brightness of the pixel values corresponding tot he first image; and

changing (35) the mean brightness and standard deviation of subsequently displayed images according to the brightness scale factor and the contrast scale factor.

**6.** Method according to claim 5 comprising the step of:

deleting (30) data from the histogram corresponding to pixel values below a level representing background portions of a respective image.

**7.** Method according to claims 5 and 6 wherein the image data includes the field of view of the image and the image data is obtained from an NMR measurement using a coil, comprising the steps of:

determining whether the size of the field of view is below a predetermined size dependent on the coil; and

deleting data from the histogram corresponding to pixels representing background portions of a respective image if the field of view is below the predetermined size.

**8.** Method according to claim 6 wherein the level is found by a method comprising the steps of:

finding the lowest histogram bin value x such that the number of pixels in the histogram having bin value x, designated $L_x$, satisfies the relation $L_{x-1} < L_x > L_{x+1}$; and

finding the first bin value y while increasing in the histogram from x such that the number of pixels in the histogram having bin value y, designated $L_y$, satisfied the relation $L_{y-2} > L_{y-1} > L_y < L_{y+1}$, the level being equal to y.

**Patentansprüche**

**1.** Einrichtung zum Einstellen der Helligkeit und des Kontrastes von Bildern, die aus Bilddaten konstruiert sind, die mehrere Pixelwerte für jedes entsprechende Bild aufweisen, wobei die Einrichtung enthält:

eine Einrichtung (43) zum Liefern eines Histogramms der Bilddaten, die jedem entsprechenden Bild entsprechen, wobei das Histogramm die Anzahl von Pixeln eines Bildes darstellen, das jeden möglichen Pixelwert hat,

eine Einrichtung zum Berechnen des Mittelwertes und der Standardabweichung von jedem Histogramm,

eine Einrichtung zum Darstellen eines ersten Bildes entsprechend wenigstens einem Teil der Bilddaten mit einer zufälligen Anfangshelligkeit und -kontrast,

eine Einrichtung (45) zum Einstellen des Erscheinungsbildes des ersten dargestellten Bildes, um ein bevorzugtes Bild zu liefern,

eine Einrichtung (44) zum Berechnen eines Helligkeits-Skalierungsfaktors ($\beta$), der von der Differenz zwischen der mittleren Helligkeit des bevorzugten Bildes ($L_0$) und der mittleren Helligkeit der Pixelwerte abgeleitet ist, die dem ersten Bild ($L_a$) entsprechen,

und zum weiteren Berechnen eines Kontrast-Skalierungsfaktors ($\alpha$), der von dem Verhältnis der dem dargestellten Bild entsprechenden Standardabweichung ($W_0$) des bevorzugten

Bildes zu der Standardabweichung (d) von der mittleren Helligkeit der Pixelwerte abgeleitet ist, die dem ersten Bild entsprechen, und

eine Skalierungseinrichtung (42) zum Verändern der mittleren Helligkeit und der Standardabweichung von nachfolgend dargstellten Bildern entsprechend dem Helligkeits-Skalierungsfaktor und dem Kontrast-Skalierungsfaktor.

2. Einrichtung nach Anspruch 1, wobei eine Hintergrund-Entfernungseinrichtung (41) vorgesehen ist, die mit der Histogrammeinrichtung verbunden ist, um selektiv herbeizuführen, daß Bilddaten unterhalb eines berechneten Wertes in dem Histogramm bei der Darstellung eines Bildes ignoriert werden, wobei der berechnete Wert dem ersten Tal entspricht, das dem ersten Spitzenwert in dem Histogramm unmittelbar folgt.

3. Einrichtung nach Anspruch 1 oder 2, wobei die Bilddaten das Sichtfeld von dem Bild enthalten und

die Hintergrund-Entfernungseinrichtung (41) mit der Dateneinrichtung verbunden ist, um zu bewirken, daß Bilddaten unterhalb eines berechneten Wertes in dem Histogramm bei der Darstellung eines Bildes ignoriert werden, wenn das Sichtfeld unterhalb einer vorbestimmten Größe ist, und anderenfalls die Daten unterhalb des berechneten Wertes bei der Darstellung eines Bildes verwendet werden, wobei der berechnete Wert dem ersten Tal entspricht, das dem ersten Spitzenwert in dem Histogramm unmittelbar folgt.

4. Einrichtung nach einem der vorstehenden Ansprüche, wobei die Bilddaten die Resultate von MR Messungen enthalten, wobei die Bilddaten ferner eine Anzeige des Spulentyps aufweisen, der bei der Ableitung der MR Messungen verwendet ist, und wobei die vorbestimmte Größe des Sichtfeldes von der angegebenen Spule abhängt.

5. Verfahren zum Einstellen von Helligkeit und Kontrast von Bildern, die aus Bilddaten konstruiert sind, die mehrere Pixelwerte für jedes entsprechende Bild aufweisen, wobei das Verfahren die Schritte enthält:

Bereitstellen eines Histogramms (31) von den Bilddaten, die jedem Bild entsprechen, wobei das Histogramm die Anzahl der Pixel von einem Bild darstellt, das jeden möglichen Pixelwert hat,

Berechnen des Mittelwertes und der Standardabweichung von jedem Histogramm,

Darstellen (32) von einem ersten Bild, das wenigstens einem Teil der Bilddaten mit zufälliger Anfangshelligkeit und -kontrast entspricht,

Einstellen (33) des Erscheinungsbildes des ersten dargestellten Bildes, um ein bevorzugtes Bild zu liefern,

Berechnen (34) eines Helligkeits-Skalierungsfaktors ($\beta$), der aus der Differenz zwischen der mittleren Helligkeit des bevorzugten Bildes ($L_0$) und der mittleren Helligkeit der Pixelwerte abgeleitet ist, die dem ersten Wert ($L_a$) entsprechen,

Berechnen (34) eines Kontrast-Skalierungsfaktors ($\alpha$) der aus dem Verhältnis der dem dargestellten Bild zugeordneten Standardabweichung ($W_0$) des bevorzugten Bildes zu der Standardabweichung (d) von der mittleren Helligkeit der Pixelwerte abgeleitet ist, die dem ersten Bild entsprechen, und

Verändern (35) der mittleren Helligkeit und der Standardabweichung von nachfolgend dargestellten Bildern gemäß dem Helligkeits-Skalierungsfaktor und dem Kontrast-Skalierungsfaktor.

6. Verfahren nach Anspruch 5, enthaltend den Schritt:

Weglassen (30) von Daten aus dem Histogramm, die Pixelwerten unterhalb eines Wertes entsprechen, der Hintergrundabschnitte von einem entsprechenden Bild darstellt.

7. Verfahren nach den Ansprüchen 5 und 6, wobei die Bilddaten das Sichtfeld von dem Bild enthalten und die Bilddaten von einer MR Messung erhalten werden, wobei eine Spule verwendet wird, enthaltend die Schritte:

Ermitteln, ob die Größe des Sichtfeldes unterhalb einer vorbestimmten Größe in Abhängigkeit von der Spule ist, und

Weglassen von Daten aus dem Histogramm entsprechend Pixeln, die Hintergrundteile von einem entsprechenden Bild darstellen, wenn das Sichtfeld unterhalb der vorbestimmten Größe ist.

8. Verfahren nach Anspruch 6, wobei der Wert durch ein Verfahren gefunden wird, das die Schritte enthält:

Finden des kleinsten Histogramm-Binwertes x, so daß die Anzahl von Pixeln in dem Histogramm mit dem Binwert x, der mit $L_x$ bezeichnet ist, die Relation $L_{x-1} < L_x > L_{x+1}$ erfüllt, und

Finden des ersten Binwertes y, während in dem Histogramm von x vergrößert wird, so daß die Anzahl von Pixeln in dem Histogramm mit einem Binwert y, der mit $L_y$ bezeichnet ist, die Relation $L_{y-2} > L_{y-1} > L_y < L_{y+1}$ erfüllt, wobei der Wert gleich y ist.

## Revendications

1. Appareil pour régler la luminosité et le contraste d'images construites à partir de données d'image qui contiennent une pluralité de valeurs de pixels pour chaque image respective, ledit appareil comprenant :

   - des moyens pour fournir un histogramme (43) des données d'image correspondant à chaque image respective, l'histogramme représentant le nombre de pixels d'une image ayant chaque valeur de pixel possible,
   - des moyens pour calculer la valeur moyenne et l'écart type de chaque histogramme,
   - des moyens pour afficher une première image qui correspond à une partie au moins des données d'image avec une luminosité et un contraste initiaux arbitraires,
   - des moyens (45) pour régler l'aspect de la première image affichée afin de donner une image préférée,
   - des moyens (44) pour calculer un facteur d'échelle de luminosité ($\beta$) déduit de la différence entre la luminosité moyenne ($L_0$) de l'image préférée et la luminosité moyenne ($L_a$) des valeurs de pixels correspondant à la première image et pour calculer en outre un facteur d'échelle de contraste ($\alpha$) déduit du rapport entre l'écart type d'image affichée ($W_0$) de l'image préférée et l'écart type ($\sigma$) par rapport à la luminosité moyenne des valeurs de pixels correspondant à la première image, et
   - des moyens de mise à l'échelle (42) pour modifier la luminosité moyenne et l'écart type des images ultérieurement affichées en fonction du facteur d'échelle de luminosité et du facteur d'échelle de contraste.

2. Appareil selon la revendication 1, comprenant des moyens (41) de suppression d'arrière-plan couplés aux moyens d'obtention d'histogramme pour amener de manière sélectionnable les données d'image qui se situent en-dessous d'un niveau calculé dans l'histogramme à être ignorées pour l'affichage d'une image, la valeur calculée correspondant au premier creux qui suit immédiatement le premier pic de l'histogramme.

3. Appareil selon la revendication 1 ou 2, dans lequel les données d'image incluent l'angle de champ de l'image et les moyens (41) de suppression d'arrière-plan, couplés aux moyens d'obtention d'histogramme amènent les données d'image qui se situent en-dessous d'un niveau calculé dans l'histogramme à être ignorées pour l'affichage d'une image si l'angle de champ de l'image est en-dessous d'une taille prédéterminée et utilisent sinon dans l'affichage de l'image les données qui se situent en-dessous du niveau calculé, le niveau calculé correspondant au premier creux qui suit immédiatement le premier pic de l'histogramme.

4. Appareil selon l'une quelconque des précédentes revendications, dans lequel les données d'image incluent les résultats de mesures de RMN, dans lequel les données d'image incluent en outre une indication du type de bobine utilisée pour obtenir les mesures de RMN et dans lequel la taille prédéterminée de l'angle de champ dépend de la bobine indiquée.

5. Procédé pour régler la luminosité et le contraste d'images construites à partir de données d'image incluant une pluralité de valeurs de pixels pour chaque image respective, ledit procédé comprenant les étapes consistant à :

   - fournir un histogramme (31) des données d'image correspondant à chaque image respective, l'histogramme représentant le nombre de pixels d'une image ayant chaque valeur de pixel possible,
   - calculer la valeur moyenne et l'écart type de chaque histogramme,
   - afficher (32) une première image qui correspond à une partie au moins des données d'image avec une luminosité et un contraste initiaux arbitraires,
   - régler (33) l'aspect de la première image affichée afin de donner une image préférée,
   - calculer (34) un facteur d'échelle de luminosité ($\beta$) déduit de la différence entre la luminosité moyenne ($L_0$) de l'image préférée et la luminosité moyenne ($L_a$) des valeurs de pixels correspondant à la première image,
   - calculer (34) un facteur d'échelle de contraste ($\alpha$) déduit du rapport entre l'écart type d'image affichée ($W_0$) de l'image préférée et l'écart type ($\sigma$) par rapport à la luminosité moyenne des valeurs de pixels correspondant à la première image, et
   - modifier (35) la luminosité moyenne et l'écart type des images ultérieurement affichées en fonction du facteur d'échelle de luminosité et du facteur d'échelle de contraste.

6. Procédé selon la revendication 5, comprenant l'étape consistant à supprimer (30) de l'histogramme des données qui correspondent à des valeurs de pixels se situant en-dessous d'un niveau qui représente des parties d'arrière-plan d'une image correspondante.

7. Procédé selon les revendications 5 et 6, dans lequel les données d'image incluent l'angle de champ de l'image et les données d'image sont obtenues à partir de mesures de RMN utilisant une bobine, comprenant les étapes consistant à :

- déterminer si la valeur de l'angle de champ de l'image est en-dessous d'une taille prédéterminée qui dépend de la bobine, et
- supprimer de l'histogramme des données qui correspondent aux pixels qui représentent des parties d'arrière-plan d'une image correspondante si la valeur de l'angle de champ est en-dessous de la taille prédéterminée.

8. Procédé selon la revendication 6, dans lequel le niveau est trouvé par une technique comprenant les étapes consistant à :

- trouver la plus petite valeur de bin (x) de l'histogramme pour que le nombre de pixels de l'histogramme ayant une valeur de bin (x), désigné par $L_x$, satisfasse à la relation $L_{x-1} < L_x > L_{x+1}$, et
- trouver la première valeur de bin (y), tout en progressant dans l'histogramme à partir de x, pour que le nombre de pixels dans l'histogramme ayant une valeur de bin y, désigné par $L_y$, satisfasse à la relation $L_{y-2} > L_{y-1} > L_y < L_{y+1}$, le niveau étant égal à y.

_FIG. 1_

_FIG. 2_

FIG. 3

FIG. 5

10

REMOVE PIXEL DATA CORRESPONDING TO BACKGROUND, IF ANY — 30

COMPUTE MEAN AND STANDARD DEVIATION OF HISTOGRAM — 31

DISPLAY AN IMAGE WITH ARBITRARY INITIAL BRIGHTNESS AND CONTRAST — 32

OPERATOR ADJUSTS IMAGE TO PREFERENCE — 33

CALCULATE SCALE FACTORS — 34

SUBSEQUENT IMAGES TESTED FOR BACKGROUND AND IMAGE DATA SKEWED BY SCALE FACTORS — 35

*FIG. 4*